Europäisches Patentamt

European Patent Office

Office européen des brevets

(11) Numéro de publication: **0 387 212**
**A1**

## (12) DEMANDE DE BREVET EUROPEEN

(21) Numéro de dépôt: **90830081.7**

(22) Date de dépôt: **02.03.90**

(51) Int. Cl.⁵: **A47J  39/00**

(30) Priorité: **06.03.89 IT 512789**

(43) Date de publication de la demande:
**12.09.90 Bulletin  90/37**

(84) Etats contractants désignés:
**AT BE CH DE ES FR GB GR LI LU NL SE**

(71) Demandeur: **Marchetti, Romano**
**2, rue Poggio Fiorito**
**Sarnico-Bergamo(IT)**

(72) Inventeur: **Marchetti, Romano**
**2, rue Poggio Fiorito**
**Sarnico-Bergamo(IT)**

(54) **Conteneur pour le réchauffement à air propulsé en sens rotatif, de repas d'un ou plusieurs plats servis dans des assiettes, ou des récipients de polypropylène, d'aluminium ou autre matériel adaptés à la liaison froid-chaud réfrigération ou congélation.**

(57) Conteneur pour le réchauffement de repas (H) comportant des ventilateurs (E) propulsant de l'air réchauffé par des résistances (D).

Coupe  A.A
longitudinale

tableau 3

### Conteneur pour le réchauffement, à air propulsé en sens rotatif, de repas d'un ou plusieurs plats servis dans des assiettes ou des récipients de prolipropilène, d'aluminium ou autre matériel adapté à la liaison froid-chaud, réfrigération ou congélation

Il s'agit d'un conteneur que l'on utilisera essentiellement dans le domaine de la restauration collective. Sa caractéristique fondamentale sur laquelle le brevet est basé est le réchauffement à air propulsé en sens rotatif. Le conteneur sera de forme rectangulaire muni de parois latérales isolées et un double fond avec une ouverture supérieure (voir tableau 1) ou frontale (voir tableau 2) muni de garnitures étanches à l'air.

Les conteneurs vendus actuellement dans le commerce recoivent les plats déjà chauds. Ils sont munis de résistances situées sur le fond du conteneur et le changement thermique se fait avec l'air statique. Il peut parfois arriver qu'entre l'insertion des plats dans le conteneur et la consommation un lapse de temps plus ou moins important s'écoule pouvant ainsi altérer la qualité des mets par un effet d'oxydation.
Ce phénomène n'a pas lieu avec mon invention car les repas sont transportés congelés ou réfrigérés (3 ou 10 degrés) et le rechauffement des plats se fait en moins d'une heure garantissant la qualité et la fraîcheur des plats.

Ce conteneur servira à réchauffer des repas à un ou plusieurs plats contenus dans des récipients adaptés à la liaison froid-chaud, réfrigération ou congélation. Les repas seront placés dans un panier extractible percé latéralement pour permettre le passage de l'air, (voir tableau 3 et 4 point F), ou dans le cas du conteneur à ouverture frontale sur une grille d'appui (voir tableau 4, point G). Le processus de réchauffement se met en marche grâce à l'interrupteur général qui transmet le courant dans le temporisateur (voir tableau 3 et 4, point A), et à l'heure programmée débute la phase de réchauffement avec mise en marche des deux ventilateurs qui aspirent l'air et la transmettent sur les deux résistances, qui se réchauffent permettant ainsi le sens rotatif (voir tableau 3 et 4, points D-C). La température sera réglée par deux thermostats fixes (voir 3 et 4, point B). Le mouvement de l'air à sens rotatif garantit ainsi une stabilité maximum de la température et du changement thermique.
Afin d'obtenir une efficacité maximum de l'appareil, le groupe ventilateur-résistance est installé dans un bloc unique (voir tableau 5) avec ouverture circulaire pour la prise d'air du ventilateur (qui se démonte pour d'éventuelles réparations) et qui se trouve sur le côté du conteneur.
Le système électrique (voir tableau 6) est de type bifase de 220 voltes avec prise de terre.

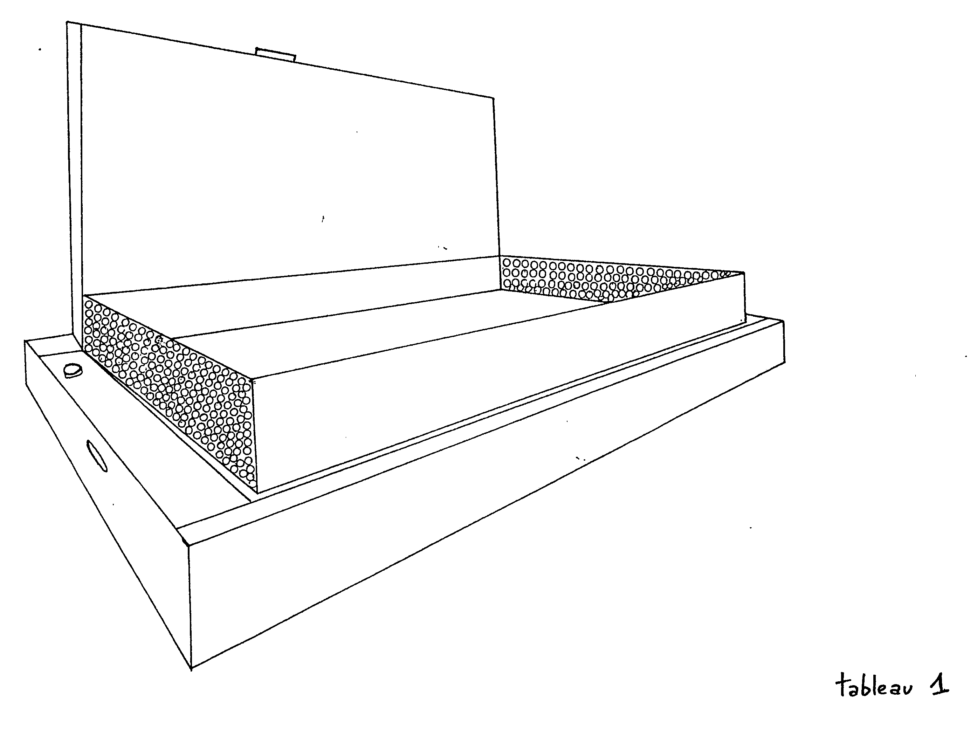

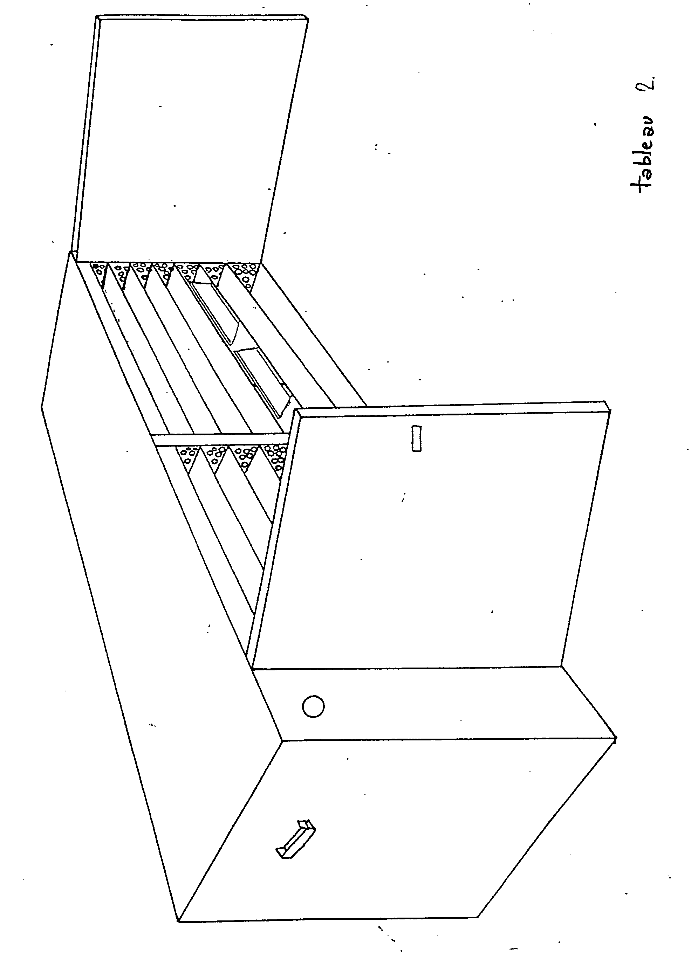

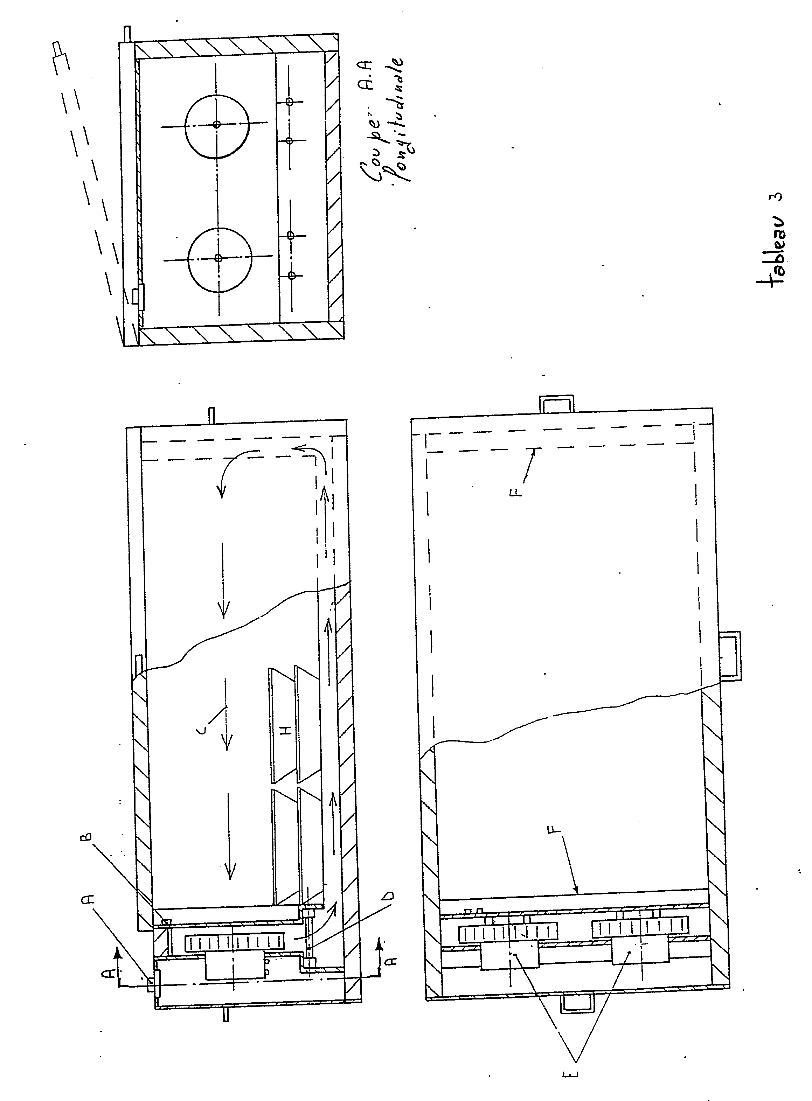

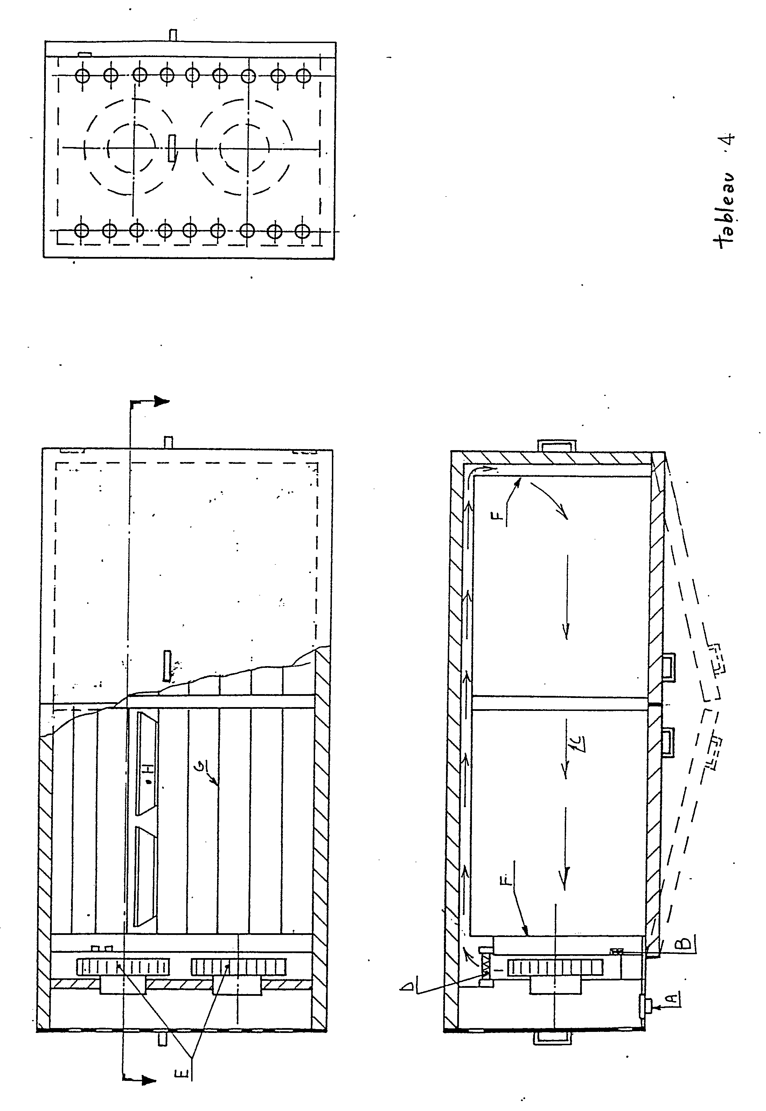

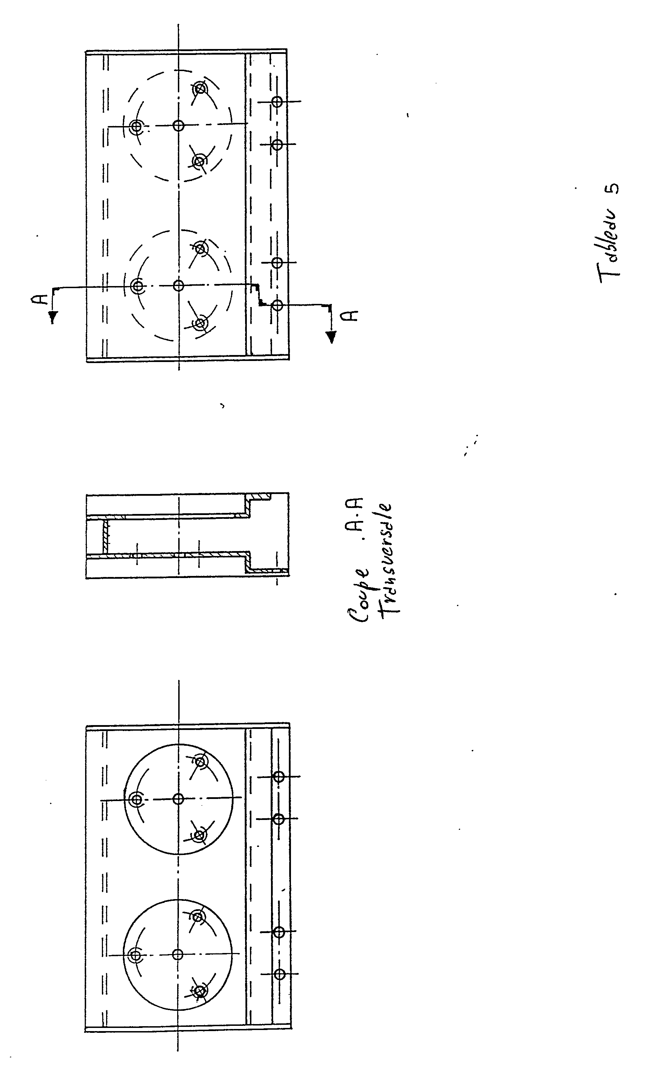

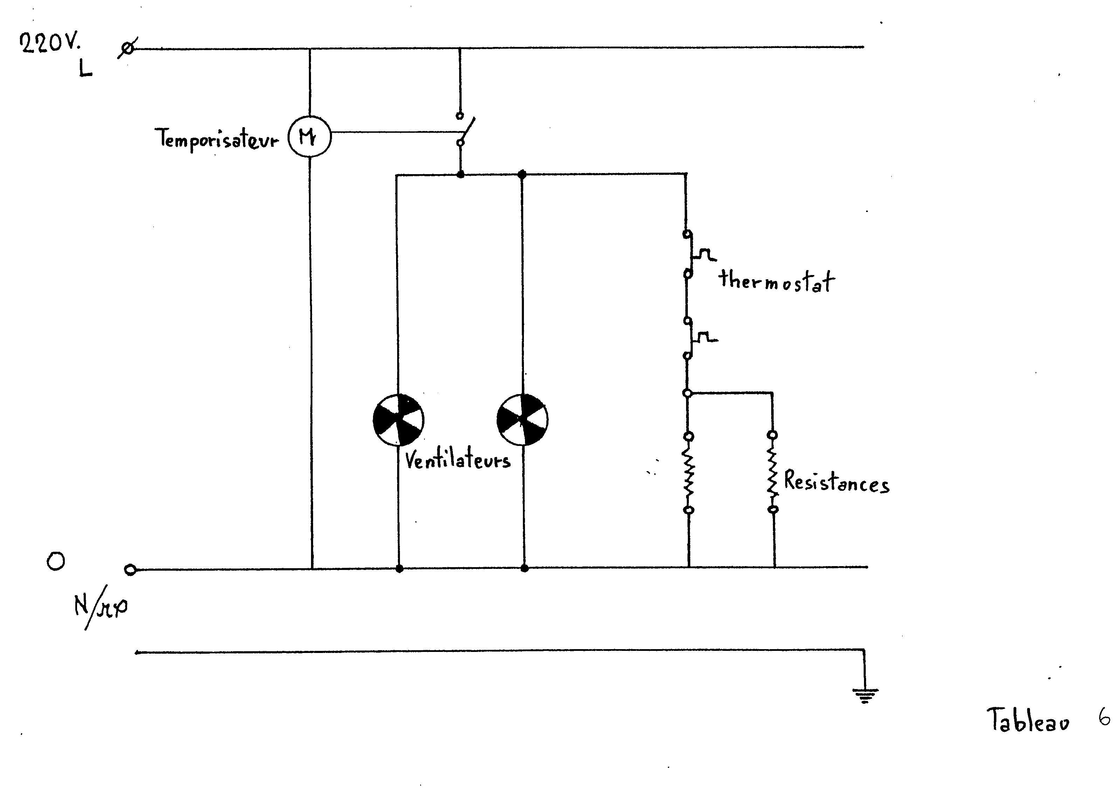

## Revendications

1. Le processus de réchauffement des repas, par le temporisateur, incorporé dans le conteneur se met en marche à l'heure désirée (qui aura été programmée précedemment) portant en peu de temps le repas à une température idéale pour la consommation et garantissant ainsi toute la qualité nutritive et organique des aliments.

2. L'air propulsée passe dans le double fond du conteneur à ouverture supérieure, et dans la double paroi dans le conteneur à ouverture frontale, réchauffée par la résistance située sous les ventilateurs.

3. La circulation de l'air se fait en sens rotatif, garantissant ainsi, une stabilité maximum de la température et du changement thermique.

4. La circulation de l'air se fait de la façon suivante: elle est aspirée par les ventilateurs, puis acheminée sur les résistances avec une effet de réchauffement immédiat et constant, passe dans le double fond ou dans la double paroi du conteneur, entre par les parois perforées dans la chambre centrale où sont posés les repas à réchauffer et de là l'air est de nouveau aspirée par les ventilateurs assurant ainsi un processus de cycle fermé. Par ailleurs, il n'y a pas de risques de surchauffement des résistances vu qu'elles seront constamment refroidies par le mouvement interrompu des ventilateurs.

tableau 1

EP 0 387 212 A1

tableau 4

Tableau 5

Coupe A.A
Transversale

Tableau 6

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1198612 (BURGER EISENWERKE AG)<br>* page 3, colonne de gauche, dernier alinéa – page 4, colonne de droite, alinéa 2 *<br>--- | 1-4 | A47J39/00 |
| X | GB-A-2202621 (VICTOR MANUFACTURING LTD.)<br>* le document en entier *<br>--- | 1-4 | |
| X | US-A-3780794 (STAUB BERNARD)<br>* colonne 2, ligne 52 – colonne 5, ligne 29 *<br>--- | 1-4 | |
| X | BE-A-640286 (AKTIEBOLAGET ELECTROLUX)<br>* page 3, alinéa 2 – page 5, alinéa 3 *<br>--- | 1-4 | |
| X | BE-A-563108 (BURGER EISENWERKE AG)<br>* page 6, ligne 24 – page 7, ligne 14 *<br>--- | 1-4 | |
| X | DE-B-1005357 (BURGER EISENWERKE AG)<br>* le document en entier *<br>--- | 1, 2, 4 | |
| A | DE-A-2606942 (MEISTER SIEGFRIED)<br>* le document en entier *<br>--- | 1, 2, 4 | DOMAINES TECHNIQUES RECHERCHES (Int. Cl.5) |
| A | DE-A-2723273 (ANSCHUTZ THEO)<br>----- | | A47J |

Le présent rapport a été établi pour toutes les revendications

| Lieu de la recherche | Date d'achèvement de la recherche | Examinateur |
|---|---|---|
| LA HAYE | 21 JUIN 1990 | FUOCHI R. |